# EUROPÄISCHE PATENTSCHRIFT

(11) **EP 2 502 498 B1**
(45) Veröffentlichungstag und Bekanntmachung des Hinweises auf die Patenterteilung: **22.07.2015**
(21) Anmeldenummer: 12159387.5
(22) Anmeldetag: 14.03.2012
(51) Int. Cl.: A23B 4/28

(54) **Verfahren und Vorrichtung zur Injektion von Flüssigkeiten in Lebensmittelprodukte**
Method and device for injecting liquids into food products
Procédé et dispositif d'injection de liquides dans des produits alimentaires

(30) Priorität: 22.03.2011 DE 102011001464
(43) Veröffentlichungstag der Anmeldung: 26.09.2012
(73) Patentinhaber: Schröder Maschinenbau KG, 33824 Werther (DE)
(72) Erfinder: Danwerth, Peter J., 33803 Steinhagen (DE)
(74) Vertreter: Ter Meer Steinmeister & Partner

(56) Entgegenhaltungen:
- EP-A1- 0 297 592
- EP-A1- 0 479 447
- EP-A1- 0 879 561
- WO-A1-2010/061406
- WO-A2-2008/007393
- WO-A2-2011/006745
- DE-A1- 19 542 864
- GB-A- 2 181 035
- GB-A- 2 355 383
- JP-A- 6 209 693
- US-A- 4 286 510
- US-A1- 2011 052 765
- US-B1- 6 386 099

## Beschreibung

Die Erfindung betrifft ein Verfahren zur Injektion von Flüssigkeit in Lebensmittelprodukte, bei dem die Lebensmittelprodukte auf einem Förderer taktweise unter wenigstens einer hubbeweglichen Gruppe von Nadeln hindurch transportiert werden und die Flüssigkeit mit Hilfe der Nadeln injiziert wird, während diese in das Lebensmittelprodukt einstechen, und bei dem die Lebensmittelprodukte die Form von Stücken haben, deren Grundriss größer ist als der einer einzelnen Gruppe der Nadeln, und die Flüssigkeit in jedem Arbeitstakt der Nadeln mit einem Druck injiziert wird, der von der Position dieser Nadeln relativ zum Grundriss des Stückes abhängig ist, in das die Nadeln einstechen.

Aus EP 0 297 592 A1 ist eine Vorrichtung dieser Art ist bekannt, die insbesondere zum Pökeln zum Fleisch dient. Bei dieser Vorrichtung sind die Gruppen der Nadeln, für die unterschiedliche Drücke einstellbar sind, quer zur Transportrichtung des Förderers angeordnet.

In DE 195 42 864 B4 wird eine Vorrichtung zum Pökeln von Geflügel beschrieben, die zwei Typen von Nadelträgem aufweist, die unterschiedlich dicht mit Nadeln bestückt und so angeordnet sind, dass die Nadeln des einen Nadelträgers in die Brust des Geflügels einstechen, während die Nadeln der anderen Nadelträger in die Keulen einstechen.

Aufgabe der Erfindung ist es, ein Verfahren anzugeben, dass es auch bei Lebensmittelprodukten, deren Stücke nicht auf ihrem gesamten Grundriss eine einheitliche Konsistenz haben, gestattet, die Flüssigkeit auf effiziente und an die jeweilige Konsistenz angepasste Weise zu injizieren.

Diese Aufgabe wird erfindungsgemäß dadurch gelöst, dass Lebensmittelprodukte, die eine über ihren Grundriss ungleichförmige Konsistenz haben, so auf den Förderer aufgelegt werden, dass die Konsistenz in Transportrichtung des Förderers variiert, und dass der Druck, mit dem die Flüssigkeit injiziert wird, von Arbeitstakt zu Arbeitstakt verändert wird.

Erfindungsgemäß wird somit der Einspritzdruck an die Konsistenz des Lebensmittelprodukts in dem gerade bearbeiteten Bereich angepasst. So kann beispielsweise in den Bereichen, in denen eine größere Flüssigkeitsmenge injiziert werden solle, mit höherem Druck eingespritzt werden. Ebenso kann auch dort mit höherem Druck eingespritzt werden, wo das Produkt eine festere Konsistenz hat und deshalb dem Eindringen der Flüssigkeit einen größeren Widerstand entgegensetzt. Dabei hat das Verfahren den Vorteil, dass nur ein einziger Typ von Nadelträgem benötigt wird und somit jeder Nadelträger jeden Bereich der Stücke der Lebensmittelprodukte bearbeiten kann. Die Breite der Vorrichtung in der Richtung quer zur Transportrichtung kann dabei auch kleiner sein als die Länge der Fleischstücke in der Richtung, in der die Konsistenz variiert.

Ein typisches Anwendungsbeispiel ist das Pökeln von sogenannten Lachsen, d.h. von Kernmuskeln des Rückens von Schlachttieren. Dabei handelt es sich um längliche Muskelstücke, deren Dichte und Festigkeit von einem Ende zum anderen abnimmt. Das erfindungsgemäße Verfahren erlaubt es dann, die Pökellake am dichteren Ende des Lachses mit höherem Druck zu injizieren als an dem Ende, an dem das Fleisch weniger fest und dicht ist.

Vorteilhafte Weiterbildungen und Ausgestaltungen der Erfindung sind in den Unteransprüchen angegeben.

Da der Einspritzdruck von Arbeitstakt zu Arbeitstakt verändert wird, braucht die Vorrichtung im Prinzip nur einen einzigen Nadelträger aufzuweisen.

Die Vorrichtung kann jedoch auch mehrere Nadelträger oder mehrere Gruppen von Nadeln aufweisen, für die der Einspritzdruck unabhängig steuerbar ist und die über die Breite die verteilt angeordnet sind und/oder in Transportrichtung aufeinanderfolgen.

Die mehreren Nadelgruppen werden gleichzeitig abgesenkt und arbeiten mit unterschiedlichen, an den jeweils zu bearbeitenden Bereich des Stückes angepasstem Einspritzdrücken. Dabei ist es auch möglich, die Lebensmittelprodukte in verhältnismäßig dichter Folge zuzuführen, so dass während desselben Arbeitstaktes mit einer Nadelgruppe das nachlaufende Ende eines ersten Stückes und mit einer anderen Nadelgruppe das vorauslaufende Ende des nächsten Stückes bearbeitet wird.

Bevorzugt wird der Beginn und/oder das Ende jedes Stückes mit einen Sensor, beispielsweise einem optischen Sensor erfasst, und die Vorrichtung wird so gesteuert, dass der Einspritzdruck für jede Nadelgruppe automatisch in Abhängigkeit vom Signal des Sensors und der Position des Förderers gesteuert wird.

Gegenstand der Erfindung ist auch eine Vorrichtung, die zur Durchführen des oben beschriebenen Verfahrens geeignet ist.

Im folgenden werden Ausführungsbeispiele anhand der Zeichnung näher erläutert.

Es zeigen:
- Fig. 1: eine schematische Ansicht einer Vorrichtung zur Durchführung des erfindungsgemäßen Verfahrens in einer ersten Ausführungsform;
- Fig. 2 und 3: Darstellungen analog zu Fig. 1, für spätere Phasen während der Ausführung des Verfahrens;
- Fig. 4: eine Ansicht einer Vorrichtung zur Ausführung einer anderen Ausführungsform des erfindungsgemäßen Verfahrens;
- Fig. 5: die Vorrichtung nach Fig. 4 in einer späteren Phase des Verfahrens; und
- Fig. 6 und 7: Beispiele für unterschiedliche Einstellungen einer Programmiereinrichtung.

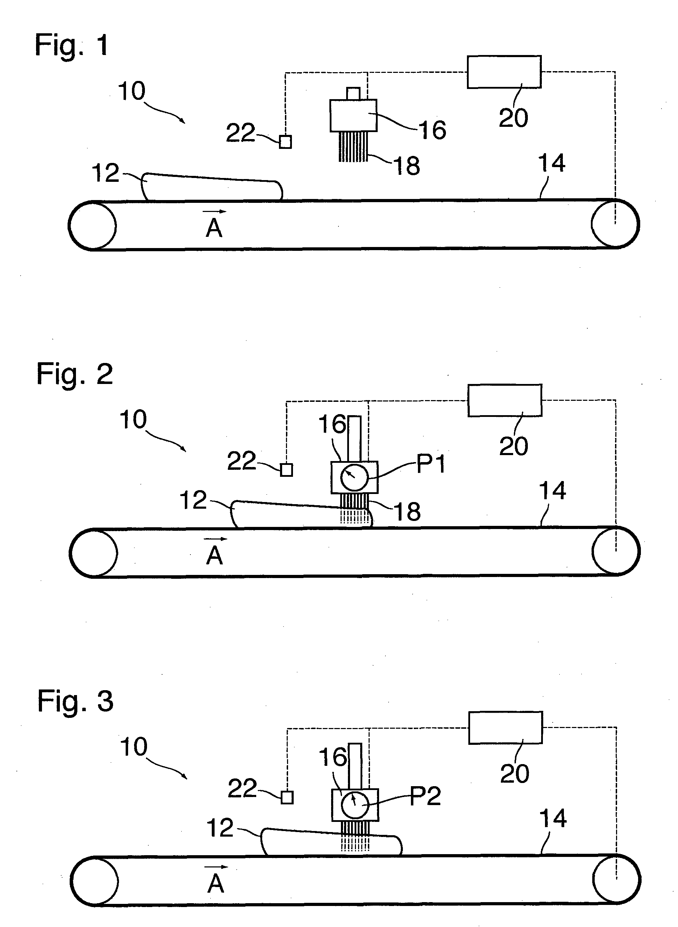

Fig. 1 zeigt eine Vorrichtung 10 zum Pökeln von Stücken 12 eines Lebensmittelprodukts, beispielsweise vom Fleischlachsen.

Die Vorrichtung weist einen Förderer 14 auf, mit dem die Stücke 12 taktweise in Richtung des Pfeils A transportiert werden. Oberhalb des Förderers ist ein hubbeweglicher Nadelträger 16 angeordnet, der an der Unterseite mit hohlen Nadeln bestückt ist. Der Nadelträger 16 ist an eine nicht gezeigte Zufuhreinrichtung für Pökellake angeschlossen und enthält Ventileinrichtungen, mit denen die Zufuhr der Lake zu den Nadeln gesteuert wird. Die Nadeln bilden eine oder mehrere Gruppen 18, die jeweils an eine gemeinsame Lakekammer angeschlossen sind, so dass die Lake sämtlichen Nadeln, die derselben Gruppe angehören, mit demselben Druck zugeführt wird. Als Beispiel soll hier angenommen werden, dass die Nadeln nur eine einzige Gruppe 18 bilden.

Eine elektronische Steuereinrichtung 20 steuert die Hubbewegungen des Nadelträgers 16, die Ventileinrichtungen für die Lakezufuhr und den Vortrieb des Förderers 14.

Auf der stromaufwärtigen Seite des Nadelträgers 16 ist oberhalb des Förderers 14 ein Sensor 22, beispielsweise ein optischer Sensor oder ein Ultraschallsensor angeordnet, mit dem der Durchgang des vorauslaufenden Endes und des nachlaufenden Endes eines Stückes 12 auf dem Förderer 14 erfasst wird. Die entsprechenden Erfassungssignale werden an die Steuereinheit 20 gemeldet.

In dem in Fig. 1 gezeigten Zustand wird gerade der Durchgang des vorauslaufenden Endes des Stückes 12 unter dem Sensor 22 erkannt. Die Steuereinrichtung 20 steuert daraufhin den Antrieb des Förderers 14 so, dass das Stück 12 noch um die bekannte Distanz weitertransportiert wird, die dem Abstand zwischen dem Sensor 22 und dem stromabwärtigen Ende des Nadelträgers 16 in der Transportrichtung A entspricht. Der Förderer 14 wird angehalten, wenn das Stück 12 die in Fig. 2 gezeigte Position erreicht hat.

Bei angehaltenem Förderer 14 wird der Nadelträger 16 abgesenkt, so dass die Nadeln in den vorauslaufenden Endbereich des Stückes 12 einstechen. Die Lake wird mit einem bestimmten Druck P1, der in Fig. 2 durch ein stilisiertes Manometer symbolisiert wird, in das Stück 12 injiziert. Die Ventilsteuerung kann in bekannter Weise so ausgelegt sein, dass die Lake erst dann abgegeben wird, wenn die Spitzen der Nadeln in das Stück 12 eingestochen haben, und die Abgabe von Lake beendet wird, sobald die Nadeln wieder aus dem Stück herausgezogen werden. Die Injektion kann wahlweise nur während der Absenkbewegung des Nadelträgers 16 oder auch während der Absenkbewegung und der Hubbewegung des Nadelträgers stattfinden. Als Beispiel kann angenommen werden, dass der Druck P1 während des gesamten Injektionsvorgangs im wesentlichen konstant ist.

Wenn der Nadelträger 16 wieder angehoben wurde, wird der Förderer 14 erneut in Betrieb gesetzt, um das Stück 12 um eine Distanz vorzurücken, die der Länge des Nadelträgers 16 in der Transportrichtung A entspricht. Fig. 3 illustriert die Situation, in der die Nadeln während des nächsten Arbeitstaktes in das Stück 12 einstechen, um die Lake in den nachfolgenden Abschnitt des Stückes 12 zu injizieren.

Fleischlachse sind ein typisches Beispiel für Lebensmittelprodukte, deren Konsistenz nicht auf dem gesamten Grundriss des Stückes 12 gleichförmig ist. Bei den länglichen Fleischlachsen ist die Festigkeit des Muskelfleisches an einem Ende größer als am entgegengesetzten Ende, und sie nimmt über die Länge des Lachses stetig ab. Als Beispiel sei hier angenommen, dass die Stücke 12 so auf den Förderer 14 aufgelegt werden, dass die Festigkeit des Fleisches am vorauslaufenden Ende am geringsten und am nachlaufenden Ende am höchsten ist. In Fig. 3 stechen deshalb die Nadeln in eine Zone des Stückes 12 ein, in denen die Festigkeit des Fleisches größer ist als in der in Fig. 2 bearbeiteten Zone. Aus diesem Grund erfolgt die Einspritzung in Fig. 3 mit einem höheren Druck P2.

In den nachfolgenden Arbeitstakten, in denen nacheinander die nachfolgenden Zonen des Stückes 12 bearbeitet werden, wird der Einspritzdruck der Lake dann schrittweise weiter erhöht. Mit Hilfe des Sensors 22 wird der Durchgang des nachlaufenden Endes des Stückes 12 festgestellt, und wenn das nachlaufende Ende in die Position unter dem Nadelträger 16 passiert hat, wird die Einspritzung beendet und der Förderer 14 wird angetrieben, bis das vorauslaufende Ende eines nachfolgenden Stückes unter dem Nadelträger 16 liegt.

Durch die beschriebene Verfahrensweise ist sichergestellt, dass der Einspritzdruck an jeder Stelle des Stückes 12 optimal an die dortige Konsistenz des Produkts angepasst ist.

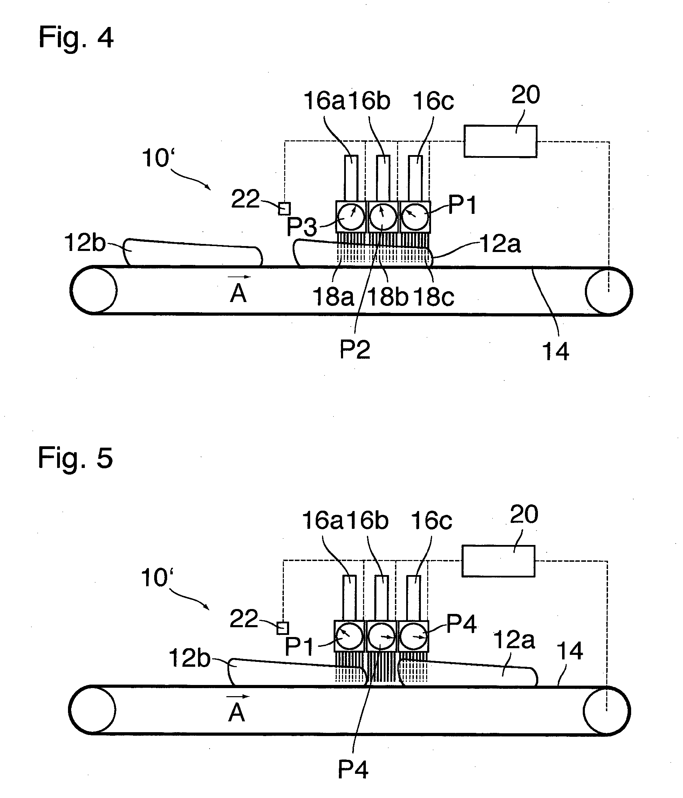

Fig. 4 illustriert eine Pökelvorrichtung 10' gemäß einem abgewandelten Ausführungsbeispiel. Der Unterschied gegenüber der Vorrichtung 10 nach Fig. 1 bis 3 besteht darin, dass hier drei Nadelträger 16a, 16b und 16c, die jeweils eine Gruppe 18a, 18b, 18c von Nadeln tragen, in der Transportrichtung A hintereinander angeordnet sind. Die Hubbewegungen dieser drei Nadelträger können synchron oder auch asynchron erfolgen, doch ist der Einspritzdruck der Lake für jede der Gruppen 18a, 18b, 18c von Nadeln individuell einstellbar.

In der in Fig. 4 gezeigten Situation werden gerade die ersten drei Zonen eines ersten Stückes 12a bearbeitet. Der Nadelträger 16c injiziert die Lake in die Zone, in der das Fleisch die geringste Festigkeit hat. Hier ist folglich der Einspritzdruck P1 am geringsten. Mit den Nadelträgern 16b und 16a wird die Lake mit schrittweise erhöhten Einspritzdrücken P2 und P3 injiziert, entsprechend der zunehmenden Festigkeit des Fleisches in dem Stück 12a.

Wenn der in Fig. 4 gezeigte Einspritzvorgang beendet ist und die Nadelträger 16a - 16c wieder angehoben wurden, wird der Förderer 14 um eine Distanz vorgerückt, die der Länge aller drei Nadelgruppen entspricht. Im nächsten Takt, der in Fig. 5 illustriert ist, befindet sich daher das Stück 12a in der Position, in der die letzte Zone dieses Stückes mit dem Nadelträger 16c bearbeitet wird. Der Einspritzdruck P4 ist hier am höchsten, da das Fleisch an diesem Ende die höchste Festigkeit hat. Ein nachfolgendes Stück 12b ist in eine Position gelangt, in der sich die erste Zone am vorauslaufenden Ende unter dem Nadelträger 16a befindet. Der Einspritzdruck ist hier auf P1 eingestellt, so dass die erste Zone des Stückes 12b wieder mit dem passenden Einspritzdruck bearbeitet wird.

Im gezeigten Beispiel werden die Stücke 12a, 12b und nicht gezeigte weitere Stücke so auf den Förderer 14 aufgelegt, dass der Abstand zwischen dem nachlaufenden Ende des einen Stückes 12a und dem vorauslaufenden Ende des nächsten Stückes 12b mindestens der Länge eines einzelnen Nadelträgers entspricht. Die verhältnismäßig große Lücke zwischen den aufeinanderfolgenden Stücken 12a, 12b stellt sicher, dass die Nadeln eines Nadelträgers jeweils nur in höchstens ein Stück eintreten, so dass der für diesen Nadelträger zu wählende Einspritzdruck eindeutig definiert ist.

In dem in Fig. 5 gezeigten Arbeitstakt arbeitet deshalb der mittlere Nadelträger 16b im Leerlauf. Da seine Nadeln nicht in das Fleisch einstechen, wird von diesen Nadeln auch keine Lake abgegeben. Der in diesem Takt eingestellte Einspritzdruck (hier P4) ist deshalb nicht relevant.

Im nächsten Arbeitstakt würden dann die drei hinteren Zonen des Stückes 12b simultan mit den drei Nadelträgem 16a - 16c bearbeitet. Der Vortrieb des Förderers 14 wird ähnlich wie in Fig. 1 bis 3 anhand der Signale des Sensors 22 gesteuert. Diese Signale sorgen auch dafür, dass der Einspritzdruck jedes Nadelträgers an die von diesem Nadelträger bearbeitete Zone des Produkts angepasst ist. Während in Fig. 4 und 5 drei separate Nadelträger gezeigt sind, könnten in einer anderen Ausführungsform die drei Nadelträger auch zu eine einzigen Nadelträger zusammengefasst sein, der lediglich drei in Transportrichtung A hintereinander liegende Gruppen 18a, 18b, 18c von Nadeln aufweist.

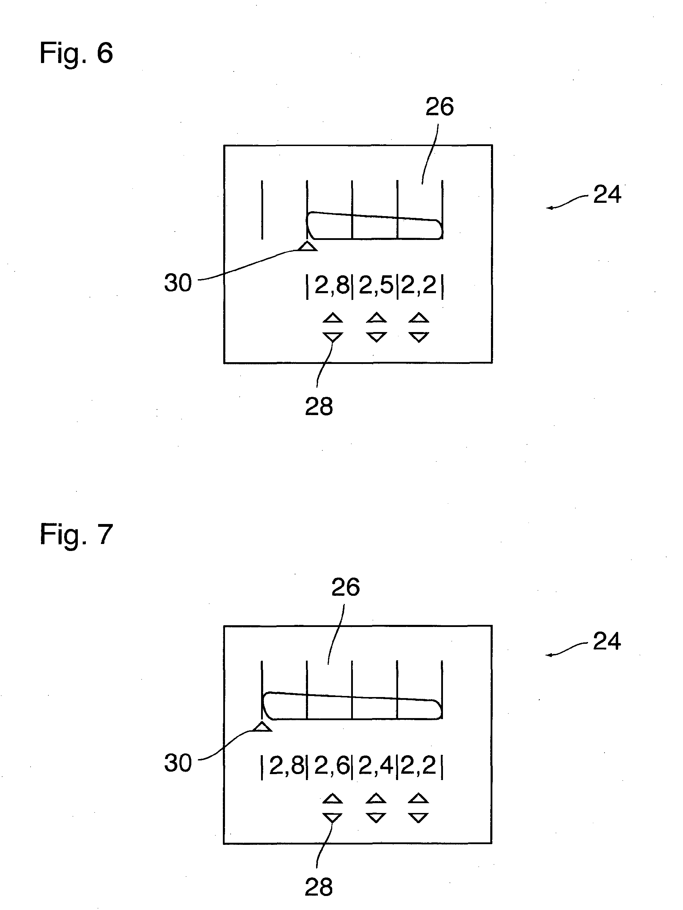

Fig. 6 zeigt eine Programmiereinrichtung 24 in der Form eines berührungsempfindlichen Bildschirms, auf dem eine symbolische Darstellung eines einzelnen Fleischstückes in mehrere Zonen 26 aufgeteilt ist. Jeder Zone ist eine Ziffernanzeige zur Angabe des für diese Zone eingestellten Einspritzdruckes sowie ein Paar von Pfeiltasten 28 zugeordnet, mit denen der Einspritzdruck erhöht und gesenkt werden kann. Auf diese Weise ist es möglich, die Vorrichtung so zu programmieren, dass in jeder Zone mit dem an die dortige Konsistenz des Fleisches angepassten Einspritzdruck gearbeitet wird.

Im Betrieb der Vorrichtung erkennt der Sensor 22 automatisch den Beginn jedes Fleischstückes 12. Anhand dieser Information und anhand der bekannten Transportgeschwindigkeit des Förderers 14 berechnet die Steuereinheit 20 für jede der Zonen 26 den Zeitpunkt bzw. den Arbeitstakt, in dem diese Zone der Nadelgruppe liegt. Die Nadeln werden dann mit dem an der Programmiereinheit 24 für die betreffende Zone eingestellten Einspritzdruck gespeist.

Im gezeigten Beispiel weist die Progammiereinheit 24 noch eine weitere Marke 30 auf, mit der die Länge der zu bearbeitenden Fleischstücke 12 angegeben werden kann. Fig. 7 illustriert die Programmierung für einen Anwendungsfall, bei dem die Fleischstücke länger sind und sich über vier Zonen 26 erstrecken. Demgemäß werden hier vier verschiedene Einspritzdrücke für die vier Zonen spezifiziert. Im gezeigten Beispiel ist das Profil der Einspritzdrücke in Fig. 7 das gleiche wie in Fig. 6, und das Profil wurde lediglich entsprechend der größeren Länge der Fleischstücke skaliert.

In einer modifizierten Ausführungsform kann der Sensor 22 auch das Ende jedes Fleischstückes abtasten und so die Länge der einzelnen Fleischstücke automatisch messen. In dem Fall kann auch die Skalierung des Einspritzprofils automatisch erfolgen.

## Patentansprüche

1. Verfahren zur Injektion von Flüssigkeit in Lebensmittelprodukte, bei dem die Lebensmittelprodukte auf einem Förderer (14) taktweise unter wenigstens einer hubbeweglichen Gruppe (18; 18a - 18c) von Nadeln hindurch transportiert werden und die Flüssigkeit mit Hilfe der Nadeln injiziert wird, während diese in das Lebensmittelprodukt einstechen, und bei dem die Lebensmittelprodukte die Form von Stücken (12; 12a, 12b) haben, deren Grundriss größer ist als der einer einzelnen Gruppe (18; 18a - 18c) der Nadeln, und die Flüssigkeit in jedem Arbeitstakt der Nadeln mit einem Druck (P1-P4) injiziert wird, der von der Position dieser Nadeln relativ zum Grundriss des Stückes (12; 12a, 12b) abhängig ist, in das die Nadeln einstechen, **dadurch gekennzeichnet, dass** Lebensmittelprodukte, die eine über ihren Grundriss ungleichförmige Konsistenz haben, so auf den Förderer (14) aufgelegt werden, dass die Konsistenz in Transportrichtung (A) des Förderers variiert, und dass der Druck, mit dem die Flüssigkeit injiziert wird, von Arbeitstakt zu Arbeitstakt verändert wird.

2. Verfahren nach Anspruch 1, bei dem mit einem Sensor (22) der Anfang und/oder das Ende eines auf den Förderer (14) zugeführten Stückes (12; 12a, 12b) des Lebensmittelprodukts detektiert wird und der Einspritzdruck der Flüssigkeit in Abhängigkeit vom Signal des Sensors (22) und vom Transportweg des Förderers (14) gesteuert wird.

3. Verfahren nach einem der vorstehenden Ansprüche, bei dem die Flüssigkeit mit mehreren Gruppen (18a - 18c) von Nadeln injiziert wird, und der Einspritzdruck der Flüssigkeit während eines Arbeitstaktes für jede Gruppe einzeln eingestellt wird.

4. Verfahren nach Anspruch 3, bei dem die Gruppen (18a - 18c) der Nadeln in Transportrichtung (A) des Förderers (14) hintereinander angeordnet sind.

5. Verfahren nach Anspruch 4, bei dem die Stücke (12a, 12b) der Lebensmittelprodukte so auf den Förderer (14) aufgelegt werden, dass zwischen ihnen in Transportrichtung (A) des Förderers Lücken bestehen, die mindestens so lang sind wie die Ausdehnung einer einzelnen Gruppe (18a - 18c) der Nadeln in dieser Richtung.

6. Vorrichtung zur Durchführung des Verfahrens nach einem der vorstehenden Ansprüche, mit einem Förderer (14) für die Stücke (12; 12a, 12b) der Lebensmittelprodukte, mindestens einem hubbeweglich über dem Förderer angeordneten und mit Nadeln bestückten Nadelträger (16, 16a - 16c) und einer elektronischen Steuereinheit (20), die dazu ausgebildet ist, den Druck (P1 - P4), mit dem die Flüssigkeit während eines Arbeitstaktes des Nadelträgers in die Stücke (12; 12a, 12b) injiziert wird, in Abhängigkeit von der Position der Nadeln relativ zur in Transportrichtung (A) des Förderers gemessenen Lage des Stückes zu steuern, in das die Nadeln einstechen.

7. Vorrichtung nach Anspruch 6, mit einem Sensor (22) zur Erfassung des vorauslaufenden und/oder nachlaufenden Endes eines auf den Förderer (14) zugeführten Stückes (12; 12a, 12b).

8. Vorrichtung nach Anspruch 6 oder 7, mit mehreren Gruppen (18a - 18c) von Nadeln, für die der Druck (P1 - P4), mit dem die Flüssigkeit während eines Arbeitstaktes des oder der Nadelträger injiziert wird, unabhängig von dem Druck in den anderen Gruppen einstellbar ist.

9. Vorrichtung nach einem der Ansprüche 6 bis 8, bei der die in Transportrichtung (A) des Förderers (14) hintereinander angeordneten Gruppen (18a -18c) der Nadeln synchron relativ zum Förderer bewegt werden.

10. Vorrichtung nach einem der Ansprüche 6 bis 9, mit einer Programmiereinrichtung (24), mit der die Einspritzdrücke für verschiedene, in Transportrichtung aufeinanderfolgende Zonen (26) der Stücke (12) unabhängig voneinander programmierbar sind.

## Claims

1. A method for injecting liquid into food products, wherein the food products are moved intermittently on a conveyer (14) underneath and past at least one liftable group (18; 18a - 18c) of needles, and the liquid is injected by means of the needles while these needles penetrate into the food product, and wherein the food products have the form of pieces (12; 12a, 12b) the footprint of which is larger than that of an individual group (18; 18a - 18c) of the needles, and the liquid is injected in each stroke of the needles with a pressure (PI - P4) that depends upon the position of these needles relative to the footprint of the piece (12; 12a, 12b) into which the needles penetrate, **characterized in that** the food products, which have a consistency that is not uniform over their footprint, are placed on the conveyer (14) in such a manner that the consistency varies in the direction (A) of transport of the conveyer, and **in that** the pressure with which the liquid is injected is changed from stroke to stroke.

2. The method according to claim 1, wherein the beginning and/or the end of a piece (12; 12a, 12b) of the food product that is supplied on the conveyer (14) is detected with a sensor (22), and the injection pressure of the liquid is controlled in accordance with the signal of the sensor (22) and in accordance with the path of travel of the conveyer (14).

3. The method according to any of the preceding claims, wherein the liquid is injected with several groups (18a - 18c) of needles and the injection pressure of the liquid is adjusted individually for each group during a stroke.

4. The method according to claim 3, wherein the groups (18a - 18c) of the needles are arranged one behind the other in the direction (A) of transport of the conveyer (14).

5. The method according to claim 4, wherein the pieces (12a, 12b) of the food products are placed on the conveyer (14) in such a manner that gaps remain between them in the direction (A) of transport of the conveyer, the gaps being at least as long as the dimension of a single group (18a - 18c) of the needles in that direction.

6. An apparatus for carrying out the method according to any of the preceding claims, comprising a conveyer (14) for the pieces (12, 12a, 12b) of the food products, at least one liftable needle carrier (16, 16a - 16c) that is arranged above the conveyer and carries the needles, and an electronic control unit (20) that is configured to control the pressure (P1 - P4) with which the liquid is injected into the pieces (12; 12a,12b) during a stroke of the needle carrier in accordance with the position of the needles relative to the position of the piece into which the needles penetrate, as measured in the direction (A) of transport of the conveyer.

7. The apparatus according to claim 6, comprising a sensor (22) for detecting the leading and/or trailing end of a piece (12; 12a; 12b) supplied on the conveyer (14).

8. The apparatus according to claim 6 or 7, comprising several groups (18a - 18c) of needles, for which the pressure (PI - P4) with which the liquid is injected during one stroke of the needle carrier is adjustable independently of the pressure in the other groups.

9. The apparatus according to any of the claims 6 to 8, wherein the groups (18a - 18c) of the needles that are arranged one behind the other in the direction (A) of transport of the conveyer (14) are moved synchronously relative to the conveyer.

10. The apparatus according to any of the claims 6 to 9, comprising a programming device (24) adapted to program the injection pressures for different zones (26) of the pieces (12), which zones follow one upon the other in the direction of transport, independently from one another.

## Revendications

1. Procédé destiné à injecter du liquide dans des produits alimentaires, dans lequel les produits alimentaires sont transportés sur un convoyeur (14) passant de manière intermittente sous au moins un groupe d'aiguilles (18 ; 18a à 18c) pouvant être levées et le liquide est injecté à l'aide des aiguilles pendant que celles-ci s'enfoncent dans le produit alimentaire, et dans lequel les produits alimentaires ont la forme de pièces (12 ; 12a ; 12b) dont le contour est plus grand que celui d'un seul groupe d'aiguilles (18 ; 18a à 18c), et le liquide est injecté à chaque cycle de travail des aiguilles avec une pression (P1 à P4) qui dépend de la position de ces aiguilles par rapport au contour de la pièce (12 ; 12a, 12b) dans laquelle les aiguilles s'enfoncent, **caractérisé en ce que** les produits alimentaires qui ont une consistance hétérogène sur leur contour sont placés sur le convoyeur (14) de telle sorte que la consistance varie dans la direction de transport (A) du convoyeur, et **en ce que** la pression à laquelle le liquide est injecté varie d'un cycle de travail à un autre.

2. Procédé selon la revendication 1, dans lequel le début et/ou la fin d'une pièce (12 ; 12a, 12b) du produit alimentaire acheminée sur le convoyeur (14) est détecté par un capteur (22) et la pression d'injection du liquide est commandée en fonction du signal du capteur (22) et du trajet de transport du convoyeur (14).

3. Procédé selon l'une des revendications précédentes, dans lequel le liquide est injecté avec plusieurs groupes (18a à 18c) d'aiguilles, et la pression d'injection du liquide est réglée individuellement pour chaque groupe pendant un cycle de travail.

4. Procédé selon la revendication 3, dans lequel les groupes (18a à 18c) d'aiguilles sont agencés les uns derrière les autres dans la direction de transport (A) du convoyeur (14).

5. Procédé selon la revendication 4, dans lequel les pièces (12a, 12b) des produits alimentaires sont placées sur le convoyeur (14) de sorte qu'il existe des espaces vides entre elles dans la direction de transport (A) du convoyeur, lesquels espaces vides sont au moins aussi longs que l'étendue d'un seul groupe (18a à 18c) d'aiguilles dans cette direction.

6. Dispositif pour mettre en oeuvre le procédé selon l'une des revendications précédentes, comportant un convoyeur (14) pour les pièces (12 ; 12a, 12b) des produits alimentaires, au moins un porte-aiguilles (16, 16a à 16c) garni d'aiguilles et agencé au-dessus du convoyeur de manière à pouvoir être levé, et une unité de commande électronique (20) qui est conçue de manière à commander la pression (P1 à P4) à laquelle le liquide est injecté dans les pièces (12 ; 12a, 12b) pendant un cycle de travail du porte-aiguilles, en fonction de la position des aiguilles par rapport à la position de la pièce dans laquelle les aiguilles s'enfoncent, mesurée dans la direction de transport (A) du convoyeur.

7. Dispositif selon la revendication 6, comportant un capteur (22) pour détecter l'extrémité avant et/ou arrière d'une pièce (12 ; 12a, 12b) acheminée sur le convoyeur (14).

8. Dispositif selon la revendication 6 ou 7, comportant plusieurs groupes (18a à 18c) d'aiguilles, pour lesquelles la pression (P1 à P4) à laquelle le liquide est injecté pendant un cycle de travail du ou des porte-aiguilles, peut être réglée en fonction de la pression dans les autres groupes.

9. Dispositif selon l'une des revendications 6 à 8, dans lequel les groupes (18a à 18c) d'aiguilles agencés les uns derrière les autres dans la direction de transport (A) du convoyeur (14) se déplacent de manière synchrone par rapport au convoyeur.

10. Dispositif selon l'une des revendications 6 à 9, comportant un dispositif de programmation (24) au moyen duquel les pressions d'injection peuvent être programmées indépendamment les unes des autres pour différentes zones (26) des pièces (12) successives dans la direction de transport.
